# EUROPÄISCHE PATENTSCHRIFT

(11) **EP 2 577 109 B1**
(45) Veröffentlichungstag und Bekanntmachung des Hinweises auf die Patenterteilung: **29.06.2016**
(21) Anmeldenummer: 11715407.0
(22) Anmeldetag: 08.04.2011
(51) Int. Cl.: F16H 55/08, B23F 1/02, B23F 1/06, B23F 19/00

(54) **VERFAHREN ZUM HERSTELLEN EINES KEGELZAHNRADES FÜR EIN KEGELGETRIEBE**
METHOD FOR MANUFACTURING A BEVEL GEAR WHEEL FOR A BEVEL GEAR MECHANISM
PROCÉDÉ DE PRODUCTION D'UNE ROUE DENTÉE CONIQUE POUR UN ENGRENAGE CONIQUE

(30) Priorität: 27.05.2010 DE 102010021768
(43) Veröffentlichungstag der Anmeldung: 10.04.2013
(73) Patentinhaber: Schottel GmbH, 56322 Spay/Rhein (DE)
(72) Erfinder: HEER, Manfred, 56814 Landkern (DE); POTTS, Michael, 23970 Wismar (DE)
(74) Vertreter: Cohausz Hannig Borkowski Wißgott
(86) Internationale Anmeldenummer: PCT/EP2011/001770
(87) Internationale Veröffentlichungsnummer: WO 2011/147502

(56) Entgegenhaltungen:
- EP-A2- 0 925 857
- DE-A1- 1 625 599
- DE-A1- 4 441 088
- GB-A- 2 386 850

## Beschreibung

Die Erfindung betrifft ein Verfahren zum Herstellen eines Kegelzahnrades eines Kegelradgetriebes, dessen Zähne jeweils eine Lastflanke und eine Rückflanke aufweisen, wobei die Rückflanken einen Eingriffsbereich für Rückflanken des kämmenden Zahnrades aufweisen, bei dem ein Rohling zu einem runden Rad aus Stahl gegossen wird und danach die Zahnkonturen in das noch nicht gehärtete Material hinein gefräst und/oder geschliffen werden zum Erreichen der Makrogeometrie ,dann statt eines Härtens durch eine punktgenaue Materialabtragung insbesondere durch Fräsen oder Schleifen mit einem Vier- oder Mehrachsverfahren der äußere Bereich (B2) und der Randbereich (B3) so weit erniedrigt werden, dass diese erniedrigten Flächen bzw. Bereiche nicht mehr und damit auch nicht nach dem Härteverzug kontakten können und der verkleinerte, innere Bereich (B4) 10 bis 40 Prozent, vorzugsweise 20 bis 30 Prozent, der Gesamtflankenfläche (B1 + B2) beträgt und wobei darauf ein Härten des Zahnrades, der Zähne oder der übrig gebliebenen, inneren erhabenen Bereiche (B4) folgt (siehe DE 1 625 599 A und GB 2 386 850 A für Beispiele von Kegelzahnrädern und deren Herstellungs verfahren).

Die Zahngeometrie von Kegelzahnrädem ist immer symmetrisch bezogen auf eine durch den Zahnradmittelpunkt in radialer Richtung durch den Zahn verlaufende Symmetrieachse. Dies ist darin begründet, dass Zahnräder in der Regel für beide Laufrichtungen (Vorwärts und Rückwärts) gleich konstruiert und hergestellt werden. Aktuelle klassische Herstellungsverfahren sind in den Fertigungsfreiheitsgraden limitiert und dahingehend optimiert, mehrere Zähne eines Zahnrades gleichzeitig zu fertigen. Je nach Laufrichtung hat ein einzelner Zahn bei der Drehmomentübertragung eine Lastflanke, welche im Eingriff ist und das Drehmoment auf die Lastflanke des Gegenzahnes überträgt, und eine Rückflanke. Die Rückflanke eines Zahnes kommt bei einer Umdrehung des Zahnrades teilweise oder gar nicht in Kontakt mit dem nachfolgenden Gegenzahn des damit kämmenden Zahnrades solange keine Drehrichtungsumkehr erfolgt.

Die Konstruktion und Herstellung von Zahnrädern erfolgt im Allgemeinen für beide Drehrichtungen unabhängig vom tatsächlichen Einsatz. In der Praxis ist bei Zahnradgetrieben jedoch oft keine Drehrichtungsumkehr notwendig. Trotzdem werden die Flanken der einzelnen Zähne eines Zahnrades in der Fertigung für beide Drehrichtungen gefertigt und weitergehend bearbeitet.

Dabei bleibt unberücksichtigt, dass die Rückflanken bei rückwärtiger Drehrichtung nicht zwingend denselben Funktionscharakter haben wie die Lastflanken der entsprechenden Zähne. Dabei wird bei der Zahnradherstellung auf Seiten der Rückflanke normalerweise dieselbe Materialmenge abgetragen wie auf Seiten der Lastflanke. Im Anschluss werden beide Zahnflanken gleichermaßen z.T. kostenintensiv veredelt d.h. auch die Rückflanken werden vollständig gehärtet oder oberflächenvergütet.

Aufgabe der Erfindung ist es ein Kegelzahnrad der eingangs genannten Art so zu verbessern, dass ein geringerer Fertigungsaufwand erforderlich ist und somit geringere Kosten anfallen um die kämmende Rückflanke herzustellen. Hierfür wird ein neues Herstellungsverfahren vorgestellt. Darüber hinaus ist es Aufgabe der Erfindung ist es erweiterte Gestaltungsmöglichkeiten für Zahnkörper und Lastflanke zu ermöglichen um Verschleiß und Abwälzgeräusche zu reduzieren.

Diese Aufgabe wird erfindungsgemäß dadurch gelöst, dass die Zahnrückflanke einen, der zu erwartenden Belastung, angepassten optimierten Eingriffsbereich erhält. Die nicht benötigten Flächenanteile der Zahnflanke "springen zurück", d.h. nicht benötigte Flächen werden durch dreidimensionale materialabtragende Verfahren so weit abgetragen, dass sie nicht mehr in Kontakt mit dem nachfolgenden Gegenzahn des damit kämmenden Zahnrades kommen. Die gewünschte / benötigte Zahnflankenfläche ist somit gegenüber den abgetragenen Bereichen erhaben. Der verkleinerte, innere Bereich erhabene umfasst dabei 10 bis 40 Prozent, vorzugsweise 20 bis 30 Prozent, der Gesamtflankenfläche beträgt.

Der Vorteil derartiger im frühen Stadium der Fertigung erzeugten erhabenen Flächen ist, dass eine auf die tatsächliche Belastung optimierte reduzierte Eingriffsfläche (Lasttragbild) möglichst früh hergestellt wird. Im frühen Stadium der Fertigung können Grobkonturveränderungen an den Zähnen einfacher erfolgen als nach Abschluss von Veredelungsschritten wie der Zahnflankenhärtung. Durch die Herstellung der minimal benötigten Eingriffsfläche (Lasttragbild) werden die tatsächlich in Eingriff kommenden Kontaktflächen minimiert und somit die Abwälzgeräusche reduziert.

Besonders vorteilhaft ist, dass nur ein auf die Gesamtzahnfläche bezogene verringerter minimaler Eingriffsbereich veredelt wird. Dies bedeute, dass bei punktgenauer Veredelung nur noch der tatsächlich benötigte Bereich pro Zahn veredelt, z.B. gehärtet oder poliert wird. Dies reduziert die Produktionskosten in der Fertigung.

Von Vorteil ist weiterführend auch, dass weitere oberflächenvergütende nachfolgende Fertigungsschritte z.B. "Hartfräsen" ebenfalls nur noch an den erhabenen Bereichen der Rückflanken eines Zahnrades erfolgen. Dies führt zu Zeiteinsparungen in der Fertigung und Kosteneinsparungen aufgrund der verkürzten Bearbeitungsdauer aber auch aufgrund eines verringerten Werkzeugverschleißes.

Insbesondere reduziert dieses Vorgehen auch den automatisierten oder manuellen Nachbearbeitungsvorgang der Zahnflanken, die nach dem Härten einen Härteverzug in der Flankengeometrie aufweisen.

Von Vorteil ist auch, dass der aufgrund der optimierten Eingriffsflächengröße (Lasttragbild), der verringerte übrig gebliebene erhabene Bereich schneller manuell poliert oder maschinell geläppt werden kann.

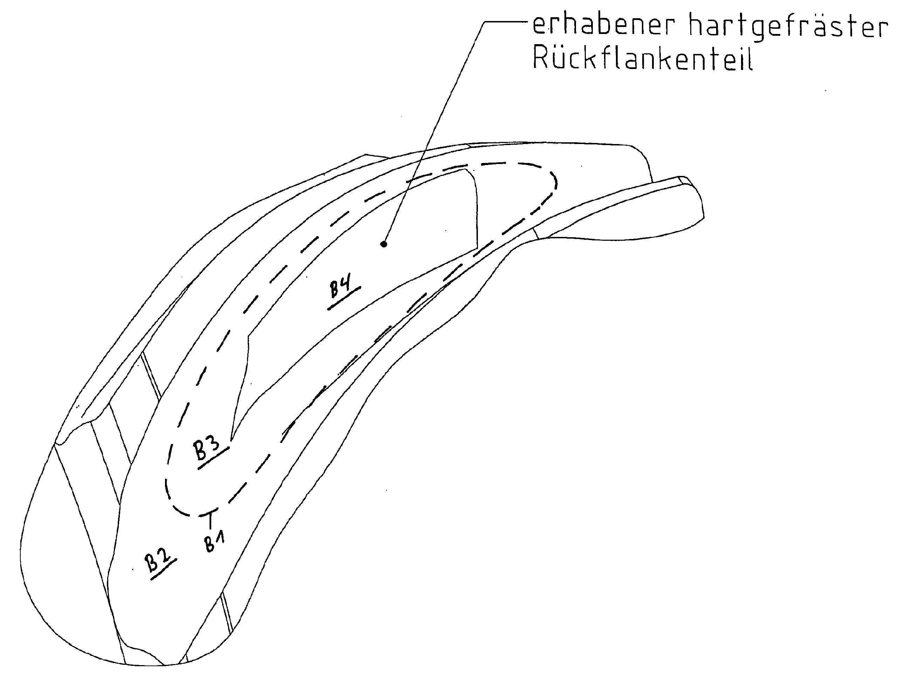

Ein Ausführungsbeispiel der Erfindung ist in der Zeichnung in einem Ausschnitt dargestellt und wird im Folgenden näher beschrieben.

Das Kegelzahnrad weist an seiner Kegelstumpfhüllfläche mehrere über den Umfang verteilte Zähne 1 auf, die jeweils eine Lastflanke und eine Rückflanke 2 besitzen.

Da für die Zahnräder eine Vorzugsdrehrichtung für die Drehmomentübertragung vorgesehen ist, haben Last- und Rückflanken unterschiedliche Funktionen, die in einer unterschiedlichen Geometrie verankert sind. Die Form der Zahnflanken ist dabei grundsätzlich beliebig. Die für eine Zahnflanke gewählte Form bestimmt aber die Form der Gegenflanke am Gegenzahnrad. Beim Kämmen von 2 Zahnrädern kommen dabei nie beide Zahnflanken vollständig zum Eingriff. Nur ein Teil der gesamten Zahnflanke B0 ist als maximal möglich nutzbarer Eingriffsbereich B1 nutzbar. Der restliche äußere Bereich B2, der Zahnrückflanke der den nutzbaren Eingriffsbereich B1 umgibt, gelangt nicht in Kontakt mit dem Gegenzahn.

Die Lastflanke übernimmt bei Vorwärtsdrehsinn die Drehmomentübertragung im Normalbetrieb und ist konstruktiv mit einer großen Eingriffsfläche (Lasttragbild) ausgelegt. Dieser nutzbare Eingriffsbereich B1 wird im Allgemeinen so groß wie möglich gefertigt, um bei zulässiger Flächenpressung an der Oberfläche des Zahnes eine maximale Drehmomentübertragung zu erreichen.

Die Rückflanke 2 wird, wenn überhaupt, nur zur Übertragung geringer Drehmomente im Rückwärtsdrehsinn verwendet. Daher wird die Flächenhöhe des ursprünglichen Eingriffsbereiches B1 bereits in der frühen Phase der Fertigung um den äußeren Randbereich B3 soweit verkleinert, dass dieser stets kontaktfrei bleibt. Übrig bleibt der innere erhabene Bereich B4 mit einer Eingriffsbereich optimierten Zahnflankentopographie.

Der erhabene Bereich B4 ist der verbleibende verkleinerte Eingriffsbereich der Rückflanke 2 der mit dem Gegenzahn in Eingriff kommt. Dieser verkleinerte, innere Bereich B4 der Rückflanke 2 beträgt zwischen 10 bis 40 Prozent, vorzugsweise 20 bis 30 Prozent, der Gesamtflankenfläche B1 + B2. Der maximal benötigte Eingriffsbereich der Rückflanke 2 ist dabei abhängig vom maximal aufzunehmenden Drehmoment und der maximal zulässigen Flächenpressung.

Die Herstellung der optimierten Zahnflankentopographie erfordert entlang des Zahnprofiles und der Zahnflanke eine dreidimensionale Materialabtragung. Die Materialabtragung, insbesondere durch Fräsen oder Schleifen der Zähne 1, erfolgt dabei punktgenau. Die nicht gewünschten Bereiche der Rückflanke 2 werden dabei so weit abgetragen, dass sie auch nach dem Härten durch den auftretenden Härteverzug nicht in Kontakt mit den Gegenflanken gelangen können. Die Höhe der dreidimensionalen Materialabtragung wird weitergehend auch dadurch bestimmt, dass bei belastungsinduzierter Verformung der Zahnflanke nur der gewünschte verkleinerte, innere Bereich B4 der Rückflanke 2 in Eingriff kommt, die übrigen Bereiche der Rückflanke 2 jedoch nicht.

Um diese spezielle Zahnflankentopographie der Rückflanken 2 der Zähne 1 zu fertigen, wird eine multidimensionale (vier und mehr Achsen, insbesondere fünf Achsen) Fräsmaschine verwendet.

Zum Glätten der übrig gebliebenen, erhabenen Bereiche B4 wird nach dem Härten mit einer multidimensionalen (vier und mehr Achsen, insbesondere fünf Achsen) Fräsmaschine die Oberfläche hartgefräst oder geschliffen.

Der abschließende Vergütungsschritt in der Fertigung des Kegelzahnrades stellt das manuelle Polieren oder maschinelle Läppen der übrig gebliebenen erhabenen Bereiche B4 der Zahnflanken dar.

## Patentansprüche

1. Verfahren zum Herstellen eines Kegelzahnrades eines Kegelradgetriebes, dessen Zähne jeweils eine Lastflanke und eine Rückflanke aufweisen, wobei die Rückflanken einen Eingriffsbereich für Rückflanken des kämmenden Zahnrades aufweisen, **dadurch gekennzeichnet,**
- **dass** ein Rohling zu einem runden Rad aus Stahl gegossen wird,
- **dass** danach die Zahnkonturen in das noch nicht gehärtete Material hinein gefräst und/oder geschliffen werden zum Erreichen der Makrogeometrie,
- **dass** dann statt eines Härtens durch eine punktgenaue Materialabtragung insbesondere durch Fräsen oder Schleifen mit einem Vier- oder Mehrachsverfahren der äußere Bereich (B2) und der Randbereich (B3) so weit erniedrigt werden, dass diese erniedrigten Flächen bzw. Bereiche nicht mehr und damit auch nicht nach dem Härteverzug kontakten können und der verkleinerte, innere Bereich (B4) 10 bis 40 Prozent, vorzugsweise 20 bis 30 Prozent, der Gesamtflankenfläche (B1 + B2) beträgt,
- **dass** darauf ein Härten des Zahnrades, der Zähne oder der übrig gebliebenen, inneren erhabenen Bereiche (B4) folgt.

2. Verfahren nach Anspruch 1, **dadurch gekennzeichnet, dass** nach dem Härten ein Hartfräsen oder Schleifen der übrig gebliebenen, erhabenen Bereiche (B4) erfolgt, um sie zu glätten.

3. Verfahren nach einem der vorherigen Ansprüche, **dadurch gekennzeichnet, dass** der übrig gebliebene erhabene Bereich (B4) manuell poliert oder maschinell geläppt wird.

## Claims

1. Method for manufacturing a bevel gear wheel for a bevel gear mechanism, the teeth of which each have a load face and a rear face, wherein the rear faces have an engagement region for rear faces of the meshing gear wheel,
**characterized in that**
- a blank is cast from steel to give a round wheel,
- thereafter, the contours of the teeth are milled and/or ground into the as yet un-hardened material in order to achieve the macro-geometry,
- then, instead of a hardening process, the outer region (B2) and the rim region (B3) are lowered by means of a point-exact removal of material, in particular by milling or grinding using a four-or multi-axis method, to the point that these lowered surfaces or regions can no longer come into contact, this therefore being the case also after the hardening distortion, and the reduced, inner region (B4) is 10 to 40 percent, preferably 20 to 30 percent of the total face surface (B1 + B2),
- there follows hardening of the gear wheel, of the teeth or of the remaining inner raised regions (B4).

2. Method according to Claim 1, **characterized in that**, after hardening, there follows hard milling or grinding of the remaining, raised regions (B4), in order to smooth them.

3. Method according to either of the preceding claims, **characterized in that** the remaining raised region (B4) is polished manually or lapped using a machine.

## Revendications

1. Procédé de production d'une roue dentée conique d'un engrenage conique dont les dents présentent à chaque fois un flanc de charge et un flanc arrière, les flancs arrière présentant une région d'engagement pour les flancs arrière de la roue dentée d'engrènement,
**caractérisé en ce que**
- une ébauche en acier est moulée pour former une roue circulaire,
- les contours de dents sont ensuite fraisés et/ou meulés dans la matière avant qu'elle ne soit durcie pour réaliser la macrogéométrie,
- ensuite, au lieu d'un durcissement, par enlèvement de matière ponctuel, notamment par fraisage ou meulage, avec un procédé à quatre axes ou plusieurs axes, la région extérieure (B2) et la région de bord (B3) sont rabaissées dans une mesure telle que ces surfaces ou régions rabaissées ne puissent plus venir en contact et par conséquent pas non plus après la déformation de trempe, et que la région rétrécie intérieure (B4) représente 10 à 40 %, de préférence 20 à 30 % de la surface de flanc totale (B1 + B2),
- **en ce qu'**ensuite un durcissement de la roue dentée, des dents ou des régions restantes intérieures rehaussées (B4) a lieu.

2. Procédé selon la revendication 1, **caractérisé en ce qu'**après le durcissement, un fraisage dur ou un meulage des régions restantes rehaussées (B4) a lieu, afin de les lisser.

3. Procédé selon l'une quelconque des revendications précédentes, **caractérisé en ce que** la région restante rehaussée (B4) est polie manuellement ou est rodée en machine.
